# EUROPÄISCHE PATENTSCHRIFT

(11) **EP 3 017 947 B1**
(45) Veröffentlichungstag und Bekanntmachung des Hinweises auf die Patenterteilung: **26.10.2016**
(21) Anmeldenummer: 15181536.2
(22) Anmeldetag: 19.08.2015
(51) Int. Cl.: B41F 33/00, G01N 21/55, G01N 21/59, H04N 1/60

(54) **VERFAHREN ZUM ERMITTELN EINER IN EINEM DRUCKPROZESS EINER DRUCKMASCHINE AUFTRETENDEN TONWERTZUNAHME**
METHOD FOR DETERMINING AN INCREASE IN A TONER VALUE OCCURRING DURING A PRINTING PROCESS OF A PRINTING MACHINE
PROCÉDÉ DE DÉTERMINATION D'UNE AUGMENTATION D'ENGRAISSEMENT SE PRODUISANT DANS UN PROCESSUS D'IMPRESSION D'UNE IMPRIMANTE

(30) Priorität: 07.11.2014 DE 102014222799
(43) Veröffentlichungstag der Anmeldung: 11.05.2016
(73) Patentinhaber: Koenig & Bauer AG, 97080 Würzburg (DE)
(72) Erfinder: Flemming, Steven, 10318 Berlin (DE); Willeke, Harald, 33102 Paderborn (DE)
(74) Vertreter: Koenig & Bauer AG

(56) Entgegenhaltungen:
- EP-A1- 0 324 718
- EP-A1- 1 744 884
- WO-A1-02/099732
- DE-A1- 19 505 820

## Beschreibung

Die Erfindung betrifft ein Verfahren zum Ermitteln einer in einem Druckprozess einer Druckmaschine auftretenden Tonwertzunahme gemäß dem Oberbegriff des Anspruches 1.

Der WO 02/099732 A1 ist ein Verfahren zum Ermitteln einer in einem Druckprozess einer Druckmaschine auftretenden Tonwertzunahme entnehmbar, wobei die Tonwertzunahme für mindestens ein auf einem in der Druckmaschine bedruckten Bedruckstoff ausgebildetes Bildelement anhand von mindestens einem Farbdichte-Istwert und einem zu dem betreffenden Bildelement gehörenden vorgegebenen Farbdichte-Sollwert berechnet wird, wobei der mindestens eine Farbdichte-Istwert oder die mehreren in dem laufenden Druckprozess auftretenden Farbdichte-Istwerte jeweils mit einer in der Druckmaschine angeordneten optoelektronischen Erfassungseinrichtung an einer durch das jeweilige Bildelement festgelegten Position automatisch erfasst werden, wobei die betreffende Position, an der der jeweilige mindestens eine Farbdichte-Istwert erfasst wird, der optoelektronischen Erfassungseinrichtung vorgegeben wird.

Durch das Dokument "Specification of the CIP3 Print Production Format", Version 3.0, Fraunhofer Institute for Computer Graphics, 02.06.1998, Seiten 1, 3-9 und 83-88, ist bekannt, in einer digitale Daten enthaltenen Datei für Dichtemessfelder die betreffenden Positionen der in Farbmessfeldern des Messstreifens enthaltenen Bildelemente vorzugeben.

Durch die DE 10 2005 060 893 A1 ist ein Verfahren zur Ermittlung eines drucktechnischen Messwerts aus einem Tonwert- und/oder Farbverlauf eines Kontrollfelds, wobei sowohl der drucktechnische Messwert als auch eine Position eines zugehörigen Messpunktes während eines Druckbetriebs einer Druckmaschine ermittelt wird, wobei vorzugsweise die Position des Messpunktes relativ zur Lage des Kontrollfeldes bzw. des Kontrollstreifens ermittelt wird. Dabei erfolgt das Ermitteln der Messwerte z. B. mittels Bilderfassung und insbesondere mittels eines CCD-Flächenchips und/oder eines CMOS-Flächenchips. Aus mindestens einem drucktechnischen Messwert wird z. B. eine Tonwertzunahme errechnet.

Durch die DE 38 18 405 A1 ist bekannt, eine relative Tonwertzunahme im Druckprozess einer Druckmaschine zu ermitteln.

Durch die DE 20 60 000 A sind ein Verfahren und eine Anordnung zur Regelung der Farbgebung beim Drucken bekannt, wobei für jede zu druckende Farbe mehrere Messflächen vorgegebener Tonwerte laufend gedruckt werden, wobei die Messflächen abgetastet und die bei der Abtastung gewonnenen Signale zur Regelung benutzt werden, wobei zusätzlich unbedruckte Stellen des Papiers abgetastet werden, wobei die ermittelten Werte mit einem Sollwert verglichen und die Differenz zur automatischen Regelung der Empfindlichkeit der Anlage benutzt werden.

Der Begriff Tonwert bezieht sich auf eine Ausbildung unterschiedlicher Stufen zwischen Hell und Dunkel von Bildelementen eines Farb-Bildes oder eines Schwarzweiß-Bildes. Dabei ist dieses Bild, d. h. dessen mindestens eine Bildelement, in einem digitalen Datensatz oder auf einem transparenten Träger, z. B. auf einem Film, oder als ein Aufsichtsbild vorhanden, wobei das Aufsichtsbild z. B. entweder fotografisch oder drucktechnisch hergestellt ist. Ein Aufsichtsbild ist ein auf einem opaken, d. h. nicht durchscheinendem Material, z. B. auf einem Bedruckstoff wiedergegebenes Bild im Unterschied zu einem Durchsichtsbild, wobei der Bedruckstoff z. B. aus Papier, aus einem Kunststoff oder aus einem Metall besteht und entweder bahnförmig oder als Bogen ausgebildet ist. Der Tonwert beschreibt für ein Bildelement des betreffenden Bildes einen Farbwert oder einen Grauwert innerhalb eines vorgegebenen Farbstufenspektrums bzw. Graustufenspektrums und wird mit Bezug auf den maximalen Wert in dem betreffenden vorgegebenen Spektrum als ein relatives Maß, insbesondere als ein Prozentwert in einem Bereich von 0% bis 100% angegeben. Somit bedeutet ein Tonwert von 100% maximale Dunkelheit bzw. maximale Farbbedeckung; in dem betreffenden Bildelement ist also ein Vollton des Abbildungsmediums ausgebildet, wobei das Abbildungsmedium bei einem drucktechnisch hergestellten Bild, d. h. bei einem Aufsichtsbild eine auf dem Bedruckstoff aufgetragene Druckfarbe ist. Entsprechend steht ein Tonwert von 0% für komplette Transparenz des Trägers oder für einen Blankobedruckstoff, d. h. einer unbedruckten Fläche bei einem drucktechnisch hergestellten Bild. Der Tonwert gilt i. d. R. immer nur für eine einzige Druckfarbe, z. B. für eine der z. B. in einem Offsetdruckverfahren verwendeten Standarddruckfarben Schwarz oder Cyan oder Magenta oder Gelb.

Es ist z. B. durch die DE 38 18 405 A1 bekannt, den Tonwert eines Bildelementes aus insbesondere densitometrischen Messungen einer optischen Dichte bzw. eines Reflexionsgrades einer zur Ausbildung des betreffenden Bildelementes auf einen Bedruckstoff aufgetragenen Druckfarbe zu bestimmen und nach der Murray-Davies-Formel aus diesen Messwerten zu berechnen. Alternativ kann der Tonwert eines Bildelementes aus einer spektralfotometrischen Messung bestimmt werden, wobei der Reflexionsgrad einer zur Ausbildung des betreffenden Bildelementes auf dem Bedruckstoff aufgetragenen Druckfarbe ermittelt wird.

Ein drucktechnisch erzeugtes, zumeist aus mehreren Bildelementen bestehendes Bild wird z. B. in einem Druckprozess einer Druckmaschine in einem Rasterdruck hergestellt, wobei Rasterdruck bedeutet, dass die einzelnen Bildelemente des betreffenden Bildes jeweils aus mindestens einem Rasterpunkt, vorzugsweise aus mehreren jeweils in einem Raster auf dem zu bedruckenden Bedruckstoff aufgetragenen Rasterpunkten ausgebildet sind. In der Drucktechnik ist der Tonwert dann ein Maß dafür, wie gedeckt eine Farbfläche, d. h. ein durch einen Auftrag von Druckfarbe ausgebildetes Bildelement eines Druckbildes, einem Normalbeobachter erscheint, wobei die betreffende Farbfläche aus einem ersten Anteil voll gedeckter Druckfarbe (Vollton) und einem zweiten Anteil mit mindestens einer farbfreier Stelle besteht, wobei das Auge des Normalbeobachters diese unterschiedlichen Anteile z. B. aufgrund der Feinheit der Rasterung zumindest im üblichen Betrachtungsabstand ohne Hilfsmittel nicht auflösen kann. Der Tonwert ist aber ein optisches und kein geometrisches Maß. Tatsächlich erscheint sowohl dem Normalbeobachter als auch einem optischen Messgerät zur Ermittlung des Tonwertes ein Bildelement, das auf einem Licht remittierenden Bedruckstoff aus Rasterpunkten gebildet ist, dunkler mit der Folge der Ermittlung eines höheren Tonwertes, als es die geometrische Flächendeckung bei dem betreffenden Bildelement erwarten lässt. Dieses physikalische Phänomen wird in der Drucktechnik als Lichtfang bezeichnet und bedeutet, dass ein in einem Rasterdruckverfahren bedrucktes Material mehr Licht absorbiert, als der Größe der bedruckten Fläche entspricht. Ein daraus resultierender Zusatzbeitrag zum Tonwert kann bis über 10% betragen und ist daher nicht vernachlässigbar. Im Rahmen einer in der Drucktechnik angestrebten Standardisierung wird dieser Zusatzbeitrag für den Offsetdruck in Normen (Prozess Standard Offset) berücksichtigt. Der Lichtfang ist aber nicht an ein bestimmtes Druckverfahren gebunden. Er tritt bei allen Bedruckstoffen auf, in die Licht eindringen kann, sowie bei lasierenden (durchsichtigen) Farbschichten mit Rastern.

Der Lichtfang erklärt sich folgendermaßen: Fällt Licht an einer Stelle zwischen den Rasterpunkten auf unbedrucktes Material, d. h. den Bedruckstoff, so dringt dieses Licht zum Teil ins Material ein. Das eingedrungene Licht wird im Bedruckstoff zurück gestreut, z. B. an Fasern und Füllstoffkristallen eines Papiers. Ein Teil des Streulichtes, das wieder an die Oberfläche des Bedruckstoffes zurückgeht, durchdringt einen oder mehrere Rasterpunkte jeweils von deren Rückseite her und wird dabei von der Druckfarbe des betreffenden Rasterpunktes wellenlängenabhängig zumindest teilweise absorbiert. Ein aus einem Raster bestehendes Bildelement absorbiert daher mehr Licht, als seiner farbbedeckten Fläche entspricht. Die messtechnisch, z. B. densitometrisch ermittelte und optisch wirksame Flächendeckung, d. h. der Tonwert, ist daher größer als die geometrische Flächendeckung in dem betreffenden Bildelement. Der Tonwert ist vom Raster und vom Bedruckstoff abhängig. Transparente Bedruckstoffe und solche, in die das Licht nicht eindringen kann, z. B. ein metallischer Bedruckstoff wie z. B. Blech oder eine Folie aus Aluminium, führen nicht zu einem Lichtfang. Je mehr Licht in einen Bedruckstoff wie z. B. in ein Papier eindringen kann, desto größere Anteile an Lichtfang werden bei der Messung des Tonwertes erfasst. Deshalb ergibt ein Naturpapier, z. B. ein ungestrichenes Papier, einen größeren Lichtfangbeitrag als ein gestrichenes Papier.

Der Begriff der Tonwertzunahme ist ebenfalls ein Begriff aus der Drucktechnik. Die Tonwertzunahme bezeichnet einen Effekt, der sich dadurch auszeichnet, dass Rasterpunkte auf einem bedruckten Bedruckstoff verfahrensbedingt größer ausgebildet sind als in einer für den betreffenden Druckprozess vorgesehenen, z. B. entweder fotografischen oder in Form eines digitalen Datensatzes bestehenden Druckvorlage. Das auf dem Bedruckstoff drucktechnisch ausgebildete Druckbild erscheint also dunkler als die entsprechende Druckvorlage. Die im Druckbild ausgebildete, auf die entsprechende Druckvorlage bezogene Tonwertzunahme wird zwar wie der Tonwert als ein Prozentwert angegeben, sie wird aber im Folgenden als eine absolute Tonwertzunahme bezeichnet, da sie jeweils mit Bezug auf die Druckvorlage eine Veränderung sowohl in der geometrischen Flächendeckung als auch in der optisch wirksamen Flächendeckung angibt. Beispielsweise erzeugt ein aus einem Raster gebildetes Bildelement, welches gemäß seiner Druckvorlage eine geometrische Flächendeckung von 80% aufweisen soll, auf dem Bedruckstoff verfahrensbedingt, z. B. in einem Offsetdruckverfahren eine geometrische Flächendeckung von z. B. 85%. Hinzu kommt der Lichtfang mit einem Beitrag z. B. von weiteren 5% als optisch wirksame Flächendeckung. In dem betreffenden Bildelement wird daher ein Tonwert von insgesamt 90% ermittelt. Für dieses Bildelement beträgt die hier als absolut bezeichnete Tonwertzunahme also insgesamt 10% gegenüber der Druckvorlage.

Eine nachfolgend als eine relative Tonwertzunahme bezeichnete Veränderung im Tonwert ergibt sich dann, wenn in einem laufenden Druckprozess einer Druckmaschine nacheinander mehrere Bildelemente gemäß derselben Druckvorlage gedruckt werden und von mindestens zwei dieser Bildelemente jeweils deren jeweiliger Tonwert ermittelt und eine zeitliche Veränderung, d. h. ein Verhältnis betrachtet wird, welches diese Tonwerte zueinander aufweisen. Eine prozentuale Veränderung des Tonwertes des später gedruckten Bildelementes bezogen auf den Tonwert des zuvor gedruckten Bildelementes bezeichnet dann eine im Druckprozess sich über die Zeit ergebende relative Tonwertzunahme.

Der Erfindung liegt die Aufgabe zugrunde, ein Verfahren zum Ermitteln einer in einem Druckprozess einer Druckmaschine auftretenden Tonwertzunahme zu schaffen, wobei dieses Verfahren die mit der betreffenden Druckmaschine in ihrem Druckprozess erzielbare Druckqualität verbessert.

Die Aufgabe wird erfindungsgemäß durch ein Verfahren gemäß Anspruch 1 gelöst. Die abhängigen Ansprüche betreffen jeweils vorteilhafte Ausgestaltungen und/oder Weiterbildungen der gefundenen Lösung.

Die mit der Erfindung erzielbaren Vorteile bestehen insbesondere darin, dass das gefundene Verfahren automatisiert in der Druckmaschine, d. h. inline ausgeführt wird oder zumindest ausführbar ist und die im laufenden Druckprozess ermittelten Messwerte dazu verwendet werden können, im Bedarfsfall eine Einzelstückprüfung der produzierten Druckbilder durchzuführen und/oder andere an dem betreffenden Druckprozess beteiligte Aggregate in der Druckmaschine direkt und unmittelbar zu steuern und/oder zu regeln, wodurch die mit der betreffenden Druckmaschine in ihrem Druckprozess erzielbare Druckqualität verbessert und eine Produktion von Makulatur verringert werden.

Ausführungsbeispiele der Erfindung werden nun im Folgenden näher beschrieben.

Bei dem vorgeschlagenen Verfahren zum Ermitteln einer in einem Druckprozess einer Druckmaschine auftretenden absoluten und/oder relativen Tonwertzunahme wird die betreffende Tonwertzunahme für mindestens ein auf einem in der Druckmaschine bedruckten Bedruckstoff ausgebildetes Bildelement anhand von mindestens einem Farbdichte-Istwert und einem zu dem betreffenden Bildelement gehörenden vorgegebenen Farbdichte-Sollwert insbesondere unter Verwendung der Murray-Davies-Formel vorzugsweise mit Hilfe eines in einer ersten Recheneinheit ausgeführten Programms berechnet. Der mindestens eine Farbdichte-Istwert oder die mehreren in dem laufenden Druckprozess auftretenden Farbdichte-Istwerte werden dabei jeweils mit einem in der Druckmaschine angeordneten Messsystem, insbesondere mit einer in der Druckmaschine angeordneten optoelektronischen Erfassungseinrichtung an einer durch das jeweilige Bildelement festgelegten Position automatisch erfasst, wobei die betreffende Position, durch welche der jeweilige Messort festgelegt wird und an welcher der jeweilige mindestens eine Farbdichte-Istwert von der optoelektronischen Erfassungseinrichtung erfasst wird, dieser optoelektronischen Erfassungseinrichtung durch digitale Daten vorgegeben wird, und zwar entweder direkt oder durch eine vorzugsweise in der ersten Recheneinheit ausgeführte Berechnung aus bereit gestellten digitalen Daten. Dabei werden die betreffenden digitalen Daten z. B. von einer Datei in einem CIP3-Datenformat oder in einem JDF-Datenformat oder in einem PDF-Datenformat oder in einem TIFF-Datenformat bereit gestellt. In einer weiteren Ausführungsvariante der Erfindung werden die betreffenden digitalen Daten von oder in einer Datei bereit gestellt, die einen auf dem Bedruckstoff in dem betreffenden Druckprozess der Druckmaschine anzuordnenden Messstreifen und/oder die Messaufgabe beschreibt. Eine solche Datei ist unabhängig von einem mit der Druckmaschine auszuführenden Druckauftrag und dessen Inhalt. Daher kann diese Datei für mehrere Druckaufträge oder sogar für alle von dieser Druckmaschine auszuführenden Druckaufträge verwendet werden. Eine solche Datei wird z. B. als Messstreifendefinition oder Messstreifenspezifikation bezeichnet. Eine solche Datei ist z. B. als eine Text-Datei oder als eine XML-Datei oder als eine CSV-Datei oder als eine Liste ausgebildet. In einer solchen Datei sind insbesondere mindestens eine Angabe zu einem Messort und/oder zu einem Messfeldtyp und/oder zu einer Messfelddefinition enthalten. Eine solche Datei kann für eine insbesondere in einem Vierfarben-Offsetdruckverfahren druckenden Druckmaschine zumindest auszugsweise z. B. wie folgt aussehen:

```
 "...
 //Messfeldnummer von der Mitte; Anfang in mm; Ende in mm; Funktion; Rapportnummer;
 Feldkürzel
 0;-2,5;2,5;Papierweiß;3;e;
 1;2,5;7,5;Platte 1 (Schwarz/Sx);1;A;
 2;7,5;12,5;Platte 4 (Yellow/Sx);1;B;
 3;12,5;17,5;Platte 2 (Cyan/Sx);1;C;
 4;17,5;22,5;Platte 3 (Magenta/Sx);1 ;D;
 5;22,5;27,5;Platte 5 (S1);1;m;
 6;27,5;32,5;Platte 1 (Schwarz/Sx);1;A;
 7;32,5;37,5;Platte 4 (Yellow/Sx);1;B;
 8;37,5;42,5;Platte 2 (Cyan/Sx);1 ;C;
 9;42,5;47,5;Platte 3 (Magenta/Sx);1;D;
 ...
 //Messfelder
 //Feldkürzel; Funktion; Platte1; Platte2; Platte3; FD1; FD2; FD3; Spezialfeld?
 A;Platte 1 (Schwarz/Sx);1;0;0;100;0;0;0
 B;Platte 4 (Yellow/Sx);4;0;0;100;0;0;0
 C;Platte 2 (Cyan/Sx);2;0;0;100;0;0;0
 D;Platte 3 (Magenta/Sx);3;0;0;100;0;0;0
 m;Platte 5 (S1);5;0;0;100;0;0;0
 E;Platte 6 (S2);6;0;0;100;0;0;0
 F;Platte 7 (S3);7;0;0;100;0;0;0
 G;Platte 8 (S4);8;0;0;100;0;0;0
 H;Platte 9 (S5);9;0;0;100;0;0;0
 I;Platte 10 (S6);10;0;0;100;0;0;0
 J;Tiefe C100,M100,Y100;2;3;4;100;100;100;0
 K;Platte 4 50% (Yellow);4;0;0;50;0;0;0
 L;Mittelton C50,M41,Y41;2;3;4;50;41;41;0
 M;Platte 2 50% (Cyan);2;0;0;50;0;0;0
 N;Platte 1 50% (Black);1;0;0;50;0;0;0
 0;Platte 3 50% (Magenta);3;0;0;50;0;0;0
 P;Platte 1 40% (Black);1;0;0;40;0;0;0
 Q;Platte 4 40% (Yellow);4;0;0;40;0;0;0
 ..."
```

Eine solche Datei ist z. B. auf der Druckmaschine oder in dem Messsystem installiert und wird durch eine z. B. über einen Messstreifennamen vorgenommene Auswahl von einem Bediener aktiviert. Es kann auch vorgehen sein, dass diese Datei durch einen sogenannten "Messstreifeneditor" von einem Anwender erstellt, gespeichert und in die Druckmaschine oder in das Messsystem geladen wird. Da aus der vorgenannten Datei, vorzugsweise aber auch aus den anderen Ausbildungen der digitalen Daten jeweils der zu einem bestimmten Bildelement gehörende Sollwert für den Tonwert bekannt ist, kann aus dem für das betreffende Bildelement ermittelten Istwert für den Tonwert die absolute und/oder relative Tonwertzunahme errechnet werden.

Eine Verwendung von digitalen Daten in einem der vorgenannten Datenformate oder in der vorstehend beispielhaft genannten Datei ist deshalb vorteilhaft, weil derartige digitale Daten unmittelbar aus demjenigen Workflow zur Verfügung gestellt werden können, der üblicherweise für die Abarbeitung des betreffenden Druckauftrags erstellt wird. Es entfallen damit eine aufwendige Datenkonvertierung und/oder mögliche Schnittstellenprobleme, um eine von der optoelektronischen Erfassungseinrichtung verwendbare Angabe für die jeweilige Position zur Erfassung des mindestens einen Farbdichte-Istwertes zu erhalten. Die die Position betreffenden Daten und/oder die jeweiligen zu dem betreffenden Bildelement gehörenden Farbdichte-Sollwerte werden vorzugsweise von einer zweiten Recheneinheit außerhalb der Druckmaschine bereit gestellt, z. B. von einer Recheneinheit einer Druckvorstufe oder von einem Messsystem außerhalb der Druckmaschine. Sollwerte für Tonwerte werden z. B. für verschiedene Rasterungen, z. B. für ein 40er Raster und/oder für ein 80er Raster bereit gestellt. Es kann vorgesehen sein, dass der Bedruckstoff orthogonal zu seiner Transportrichtung durch die Druckmaschine in mehrere Bereiche oder Zonen aufgeteilt wird und für die betreffenden Bereiche oder Zonen jeweils ein zugehöriger Sollwert für mindestens einen Tonwert und/oder eine Tonwertzunahme bereit gestellt werden.

In einer bevorzugten Ausführung des gefundenen Verfahrens wird in der Druckmaschine ein bogenförmiger Bedruckstoff bedruckt, wobei aus den in demselben laufenden Druckprozess von mehreren verschiedenen Bogen jeweils an derselben Position erfassten Farbdichte-Istwerten ein Mittelwert gebildet wird, wobei eine relative Tonwertzunahme anhand dieses Mittelwertes und den für die betreffende Position vorgegebenen Farbdichte-Sollwert berechnet wird. Alternativ wird - z. B. im Rollendruck - ein durch die Druckmaschine transportierter bahnförmiger Bedruckstoff bedruckt, wobei aus den jeweils an einer in der Druckmaschine ortsfesten Position nacheinander erfassten Farbdichte-Istwerten von dem gleichen in demselben laufenden Druckprozess wiederholt gedruckten Bildelement ein Mittelwert gebildet wird, wobei dann ebenso eine relative Tonwertzunahme anhand dieses Mittelwertes und den für die betreffende Position vorgegebenen Farbdichte-Sollwert berechnet wird. Dabei wird der Mittelwert vorzugsweise über eine einstellbare Anzahl von Messungen bzw. Bogen gebildet. Die Anzahl der der Mittelwertbildung zugrunde liegenden Messungen oder Bogen liegt z. B. in einem Bereich zwischen 10 und 100, vorzugsweise beträgt sie 50.

Die optoelektronische Erfassungseinrichtung ist z. B. als ein Flächensensor oder als ein Zeilensensor oder als ein Punktsensor ausgebildet, vorzugsweise als eine Kamera gegebenenfalls mit einer Abbildungsoptik. Die optoelektronische Erfassungseinrichtung verwendet vorzugsweise eine Beleuchtungseinrichtung, z. B. ein Blitzlicht, und/oder es ist z. B. vorgesehen, in bzw. an der optoelektronischen Erfassungseinrichtung eine Belichtungszeit, eine Öffnung einer Blende, eine Shutterzeit des betreffenden Sensors oder eine Einstellung für eine optische Schärfe variabel einzustellen. Auch können im laufenden Druckprozess von der optoelektronischen Erfassungseinrichtung insbesondere gleichzeitig mehrere Sensoren zur Erfassung der betreffenden Farbdichte-Istwerte eingesetzt werden. Der mindestens eine Sensor der optoelektronischen Erfassungseinrichtung ist bzw. wird erfindungsgemäß anhand eines geometrischen Wertes kalibriert. Eine Ermittlung mindestens eines geometrischen Wertes, vorzugsweise von mehreren geometrischen Werten, die zur Kalibrierung des mindestens einen Sensors erforderlich sind, erfolgt z. B. mit Hilfe eines absolut messenden Normfarbmessgerätes z. B. in Form eines externen Densitometers oder Spektralfotometers oder mit Hilfe eines höher als das in der Druckmaschine angeordnete Messsystem auflösenden externen Kamerasystems z. B. in Form eines Mikroskopsystems, insbesondere Messmikroskopsystems. In einer als eine Bogendruckmaschine ausgebildeten Druckmaschine ist die mindestens eine optoelektronische Erfassungseinrichtung z. B. in oder vor einem Lackwerk oder in oder vor einer Wendeeinrichtung angeordnet.

Die Erfassung der Farbdichte-Istwerte erfolgt z. B. direkt in einem Druckbild oder in einem speziellen Messfeld eines mitgedruckten Messstreifens, d. h. eines Druckkontrollstreifens. Die Erfassung der Farbdichte-Istwerte erfolgt z. B. für jeden einzelnen im Druckprozess zur Herstellung eines mehrfarbigen Druckbildes verwendeten Farbauszug vorzugsweise jeweils an mehreren Positionen.

Die von der optoelektronischen Erfassungseinrichtung erfassten Farbdichte-Istwerte und/oder die ermittelten Tonwerte werden z. B. in einem mit der optoelektronischen Erfassungseinrichtung verbundenen elektronischen, vorzugsweise digitalen Auswerterechner mittels eines Programms ausgewertet und z. B. auf einer mit dem Auswerterechner verbundenen Anzeigeeinrichtung insbesondere grafisch dargestellt, z. B. in einem Balkendiagramm oder in ISO-Charts oder gegebenenfalls auch in einer mehrdimensionalen Darstellung z. B. als ein Tonwertmessfilm. Es kann vorgesehen sein, dass bei einer Überschreitung zuvor für die ermittelten Tonwerte und/oder die ermittelte Tonwertzunahme festgelegter Grenzwerte eine Warnung z. B. an das Bedienpersonal für die Druckmaschine ausgegeben wird. Diese Grenzwerte werden z. B. global für alle am Druck beteiligten Druckfarben in gleicher Weise oder selektiv für jede am Druckprozess beteiligte Druckfarbe einzeln festgelegt. Die erfassten und/oder ermittelten Messwerte und/oder die ermittelte Tonwertzunahme werden vorzugsweise protokolliert und z. B. für ein Qualitätsprotokoll genutzt, vorzugsweise über die gesamte Auflage der in dem laufenden Druckprozess gedruckten Druckbilder. Der Auswerterechner ist z. B. mit einer Steuereinheit für eine Farbregelung in der Druckmaschine verbunden.

Aus den ermittelten Tonwerten und/oder der ermittelten Tonwertzunahme wird insbesondere automatisch, d. h. mittels eines Programms z. B. aus einem Goldbergdiagramm, einer Druckkennlinie oder einer Entwicklerkennlinie mindestens ein Korrekturwert für die z. B. in der Druckvorstufe erstellte Druckvorlage berechnet. Des Weiteren können die ermittelten Tonwerte und/oder die ermittelte Tonwertzunahme dazu verwendet werden, z. B. in einer ein Offsetdruckverfahren ausführenden Druckmaschine ein Zeitintervall festzulegen, nach welchem ein auf einem Übertragungszylinder angeordnetes Drucktuch, insbesondere Gummidrucktuch zu waschen ist, und/oder einen Eintrag von derjenigen Menge an Feuchtmittel zu steuern oder zu regeln, die in einem Nassoffsetdruckverfahren zur Ausführung des Druckprozesses erforderlich ist, und/oder ein Farbwerk hinsichtlich der auf den Bedruckstoff aufzutragenden Menge an Druckfarbe zu steuern oder zu regeln, und/oder eine Pressung in einem Druckspalt und/oder eine Druckgeschwindigkeit eines Druckwerks zu steuern oder zu regeln.

Die ermittelten Tonwerte und/oder die ermittelte Tonwertzunahme können auch z. B. dazu verwendet werden, in der Druckmaschine ein Schieben und/oder ein Dublieren und/oder eine Streifenbildung und/oder einen Kopierfehler zu erkennen und/oder zu kontrollieren.

Mit der Ermittlung der relativen Tonwertzunahme wird eine Information über eine Veränderung des Rasterdrucks insbesondere im Fortdruck der Druckmaschine gewonnen. Als Bezug für die Feststellung veränderter Tonwerte wird ein z. B. zu Beginn des Fortdrucks ermittelter Istwert eines Tonwertes oder ein für diesen Betriebszustand der Druckmaschine z. B. von der Druckvorstufe vorgegebener Sollwert eines Tonwertes zugrunde gelegt. Grundsätzlich kann jedoch auch ein anderer Zeitpunkt als der Beginn des Fortdrucks als Bezugszeitpunkt gewählt werden, da eine vorzugsweise am Auswerterechner z. B. manuell ausgelöste Nullung der relativen Tonwertzunahme auch zu jedem anderen beliebigen Zeitpunkt möglich ist. Üblicherweise wird der Fortdruck der Druckmaschine nur dann von deren Bedienpersonal oder von einer Steuereinheit freigegeben, wenn sich der ermittelte Istwert für den Tonwert mit seiner eventuellen Abweichung vom zugehörigen Sollwert innerhalb eines zulässigen Toleranzbereiches befindet.

Zusammenfassend ergibt sich ein Verfahren zum Ermitteln einer in einem Druckprozess einer Druckmaschine auftretenden Tonwertzunahme, bei dem mindestens ein Bildelement auf einem in der Druckmaschine bedruckten Bedruckstoff ausgebildet wird, bei dem die Tonwertzunahme für das mindestens eine Bildelement anhand von mindestens einem Farbdichte-Istwert und einem für das betreffende Bildelement vorgegebenen Farbdichte-Sollwert berechnet wird, bei dem der mindestens eine Farbdichte-Istwert oder die mehreren in dem laufenden Druckprozess auftretenden Farbdichte-Istwerte jeweils mit einer in der Druckmaschine angeordneten optoelektronischen Erfassungseinrichtung an einer durch das jeweilige Bildelement festgelegten Position erfasst werden, wobei mindestens ein Sensor der optoelektronischen Erfassungseinrichtung anhand mindestens eines geometrischen Wertes kalibriert wird, wobei als geometrischer Wert eine geometrische Flächendeckung verwendet wird, wobei die geometrische Flächendeckung einer von dem betreffenden Bildelement farbbedeckten Fläche auf dem Bedruckstoff entspricht. Auf diese Weise wird die Kalibrierung des mindestens einen Sensors der optoelektronischen Erfassungseinrichtung durch den Lichtfang, insbesondere durch einen durch den Lichtfang bedingten Zusatzbeitrag nicht beeinträchtigt, d. h. die Kalibrierung stützt sich nur auf die tatsächlich farbbedeckte Fläche eines Bildelementes, was dazu führt, dass die anschließend mit dem derart kalibrierten Sensor im Druckprozess durchgeführten Messungen insbesondere hinsichtlich einer Ermittlung einer Tonwertzunahme an Genauigkeit gewinnen, was sich wiederum vorteilhaft für die mit der betreffenden Druckmaschine produzierten Druckqualität verwenden lässt. Bei diesem Verfahren wird die Position, an der der jeweilige mindestens eine Farbdichte-Istwert erfasst wird, der optoelektronischen Erfassungseinrichtung vorzugsweise vorgegeben, und zwar insbesondere durch digitale Daten, die z. B. von oder in einer Datei insbesondere von einer Recheneinheit außerhalb der Druckmaschine bereit gestellt werden, wobei die Datei z. B. in einem CIP3-Datenformat oder in einem JDF-Datenformat oder in einem PDF-Datenformat oder in einem TIFF-Datenformat oder in Form einer Text-Datei oder in Form einer XML-Datei oder in Form einer CSV-Datei oder in Form einer Liste bereit gestellt wird. Die Datei beschreibt vorzugsweise einen auf dem Bedruckstoff in dem betreffenden Druckprozess der Druckmaschine anzuordnenden Messstreifen und/oder die Messaufgabe. Die Datei enthält insbesondere mindestens eine Angabe zu einem durch die betreffende Position festgelegten Messort und/oder zu einem Messfeldtyp und/oder zu einer Messfelddefinition. Die Datei kann z. B. für mehrere Druckaufträge oder sogar für alle von dieser Druckmaschine auszuführenden Druckaufträge verwendet werden. Die Erfassung der Farbdichte-Istwerte erfolgt direkt in einem Druckbild oder in einem speziellen Messfeld eines bzw. des mitgedruckten Messstreifens, wobei der mindestens eine Farbdichte-Istwert oder die mehreren in dem laufenden Druckprozess auftretenden Farbdichte-Istwerte vorzugsweise jeweils automatisch erfasst werden. Eine Ermittlung des mindestens einen zur Kalibrierung des mindestens einen Sensors erforderlichen geometrischen Wertes wird vorzugsweise mit Hilfe eines absolut messenden Normfarbmessgerätes oder mit Hilfe eines höher als das in der Druckmaschine angeordnete Messsystem auflösenden externen Kamerasystems vorgenommen.

## Patentansprüche

1. Verfahren zum Ermitteln einer in einem Druckprozess einer Druckmaschine auftretenden Tonwertzunahme, bei dem mindestens ein Bildelement auf einem in der Druckmaschine bedruckten Bedruckstoff ausgebildet wird, bei dem die Tonwertzunahme für das mindestens eine Bildelement anhand von mindestens einem Farbdichte-Istwert und einem für das betreffende Bildelement vorgegebenen Farbdichte-Sollwert berechnet wird, bei dem der mindestens eine Farbdichte-Istwert oder die mehreren in dem laufenden Druckprozess auftretenden Farbdichte-Istwerte jeweils mit einer in der Druckmaschine angeordneten optoelektronischen Erfassungseinrichtung an einer durch das jeweilige Bildelement festgelegten Position erfasst werden, **dadurch gekennzeichnet, dass** mindestens ein Sensor der optoelektronischen Erfassungseinrichtung anhand mindestens eines geometrischen Wertes kalibriert wird, wobei als geometrischer Wert eine geometrische Flächendeckung verwendet wird, wobei die geometrische Flächendeckung einer von dem betreffenden Bildelement farbbedeckten Fläche auf dem Bedruckstoff entspricht.

2. Verfahren nach Anspruch 1, **dadurch gekennzeichnet, dass** die Position, an der der jeweilige mindestens eine Farbdichte-Istwert erfasst wird, der optoelektronischen Erfassungseinrichtung vorgegeben wird.

3. Verfahren nach Anspruch 1 oder 2, **dadurch gekennzeichnet, dass** die betreffende Position, an der der jeweilige mindestens eine Farbdichte-Istwert erfasst wird, der optoelektronischen Erfassungseinrichtung durch digitale Daten vorgegeben wird.

4. Verfahren nach Anspruch 3, **dadurch gekennzeichnet, dass** die betreffenden digitalen Daten von oder in einer Datei bereit gestellt werden.

5. Verfahren nach Anspruch 4, **dadurch gekennzeichnet, dass** die Datei in einem CIP3-Datenformat oder in einem JDF-Datenformat oder in einem PDF-Datenformat oder in einem TIFF-Datenformat oder in Form einer Text-Datei oder in Form einer XML-Datei oder in Form einer CSV-Datei oder in Form einer Liste bereit gestellt wird.

6. Verfahren nach Anspruch 4 oder 5, **dadurch gekennzeichnet, dass** die Datei einen auf dem Bedruckstoff in dem betreffenden Druckprozess der Druckmaschine anzuordnenden Messstreifen und/oder die Messaufgabe beschreibt.

7. Verfahren nach Anspruch 4 oder 5 oder 6, **dadurch gekennzeichnet, dass** die Datei für mehrere Druckaufträge oder sogar für alle von dieser Druckmaschine auszuführenden Druckaufträge verwendet wird.

8. Verfahren nach Anspruch 3 oder 4 oder 5 oder 6 oder 7, **dadurch gekennzeichnet, dass** die digitalen Daten von einer Recheneinheit außerhalb der Druckmaschine bereit gestellt werden.

9. Verfahren nach Anspruch 4 oder 5 oder 6 oder 7 oder 8, **dadurch gekennzeichnet, dass** die Datei mindestens eine Angabe zu einem durch die betreffende Position festgelegten Messort und/oder zu einem Messfeldtyp und/oder zu einer Messfelddefinition enthält.

10. Verfahren nach Anspruch 1 oder 2 oder 3 oder 4 oder 5 oder 6 oder 7 oder 8 oder 9, **dadurch gekennzeichnet, dass** die Erfassung der Farbdichte-Istwerte direkt in einem Druckbild oder in einem speziellen Messfeld eines bzw. des mitgedruckten Messstreifens erfolgt.

11. Verfahren nach Anspruch 1 oder 2 oder 3 oder 4 oder 5 oder 6 oder 7 oder 8 oder 9 oder 10, **dadurch gekennzeichnet, dass** in der Druckmaschine ein bogenförmiger Bedruckstoff bedruckt wird, wobei aus den in demselben laufenden Druckprozess von mehreren verschiedenen Bogen jeweils an derselben Position erfassten Farbdichte-Istwerten ein Mittelwert gebildet wird, wobei eine relative Tonwertzunahme anhand des Mittelwertes und den für die betreffende Position vorgegebenen Farbdichte-Sollwert berechnet wird.

12. Verfahren nach Anspruch 11, **dadurch gekennzeichnet, dass** der Mittelwert über eine einstellbare Anzahl von Bogen gebildet wird.

13. Verfahren nach Anspruch 1 oder 2 oder 3 oder 4 oder 5 oder 6 oder 7 oder 8 oder 9 oder 10, **dadurch gekennzeichnet, dass** ein durch die Druckmaschine transportierter bahnförmiger Bedruckstoff bedruckt wird, wobei aus den jeweils an einer in der Druckmaschine ortsfesten Position nacheinander erfassten Farbdichte-Istwerten von dem gleichen in demselben laufenden Druckprozess wiederholt gedruckten Bildelement ein Mittelwert gebildet wird, wobei eine relative Tonwertzunahme anhand des Mittelwertes und den für die betreffende Position vorgegebenen Farbdichte-Sollwert berechnet wird.

14. Verfahren nach Anspruch 1 oder 2 oder 3 oder 4 oder 5 oder 6 oder 7 oder 8 oder 9 oder 10 oder 11 oder 12 oder 13, **dadurch gekennzeichnet, dass** eine Ermittlung des mindestens einen zur Kalibrierung des mindestens einen Sensors erforderlichen geometrischen Wertes mit Hilfe eines absolut messenden Normfarbmessgerätes oder mit Hilfe eines höher als das in der Druckmaschine angeordnete Messsystem auflösenden externen Kamerasystems vorgenommen wird.

15. Verfahren nach Anspruch 1 oder 2 oder 3 oder 4 oder 5 oder 6 oder 7 oder 8 oder 9 oder 10 oder 11 oder 12 oder 13 oder 14, **dadurch gekennzeichnet, dass** der mindestens eine Farbdichte-Istwert oder die mehreren in dem laufenden Druckprozess auftretenden Farbdichte-Istwerte jeweils automatisch erfasst werden.

## Claims

1. A method for determining an increase in a toner value occurring during a printing process of a printing machine, in which at least one picture element is configured on a printing substrate printed in the printing machine, in which the increase in the toner value is calculated for the at least one picture element on the basis of at least one ink density actual value and one ink density set point value predefined for the relevant picture element, in which the at least one ink density actual value or the several ink density actual values occurring in the running printing process are respectively detected with an opto-electrical detection device arranged in the printing machine at a position determined by the respective picture element, **characterized in that** at least one sensor of the opto-electrical detection device is calibrated by means of at least one geometric value, wherein a geometric area coverage is used as a geometric value, wherein the geometric area coverage corresponds to an area covered by ink by the relevant picture element on the printing substrate.

2. The method according to claim 1, **characterized in that** the position at which the respective at least one ink density actual value is detected, is preset for the opto-electrical detection device.

3. The method according to claim 1 or 2, **characterized in that** the relevant position at which the respective at least one ink density actual value is detected is preset for the opto-electrical detection device by digital data.

4. The method according to claim 3, **characterized in that** the relevant digital data are provided by or in a file.

5. The method according to claim 4, **characterized in that** the file is provided in a CIP3 data format or in a JDF data format or in a PDF data format or in a TIFF data format or in the form of a text file or in the form of an XML file or in the form of a CSV file or in the form of a list.

6. The method according to claim 4 or 5, **characterized in that** the file describes a measuring strip to be arranged on the printing substrate in the relevant printing process of the printing machine and/or the measuring task.

7. The method according to claim 4 or 5 or 6, **characterized in that** the file is used for a plurality of print jobs or even for all of the print jobs to be executed by this printing machine.

8. The method according to claim 3 or 4 or 5 or 6 or 7, **characterized in that** the digital data are provided by a processing unit outside of the printing machine.

9. The method according to claim 4 or 5 or 6 or 7 or 8, **characterized in that** the file contains at least one specification about a measuring site and/or a measuring field type and/or about a measuring field definition to be determined by the relevant position.

10. The method according to claim 1 or 2 or 3 or 4 or 5 or 6 or 7 or 8 or 9, **characterized in that** the detection of the ink density actual values takes place directly in a print image or in a special measuring field of a or the co-printed measuring strip.

11. The method according to claim 1 or 2 or 3 or 4 or 5 or 6 or 7 or 8 or 9 or 10, **characterized in that** an arc-shaped printing substrate is printed in the printing machine, wherein a mean is formed from the ink density actual values detected in the same running printing process of several different sheets each at the same position, wherein a relative increase in the toner value is calculated on the basis of the mean and the ink density set point value predefined for the relevant position.

12. The method according to claim 11, **characterized in that** the mean is formed by an adjustable number of sheets.

13. The method according to claim 1 or 2 or 3 or 4 or 5 or 6 or 7 or 8 or 9 or 10, **characterized in that** a web-shaped printing substrate transported through the printing machine is printed, wherein a mean is formed from the ink density actual values detected in succession at a stationary position in the printing machine by the same repeatedly printed picture element in the same printing process, wherein a relative increase in the toner value is calculated on the basis of the mean and the ink density set point value predefined for the relevant position.

14. The method according to claim 1 or 2 or 3 or 4 or 5 or 6 or 7 or 8 or 9 or 10 or 11 or 12 or 13, **characterized in that** a determination of the at least one geometric value required for the calibration of the at least one sensor is performed with the help of an absolute measuring standard colorimeter or with the help of a higher resolution external camera system than the measuring system arranged in the printing machine.

15. The method according to claim 1 or 2 or 3 or 4 or 5 or 6 or 7 or 8 or 9 or 10 or 11 or 12 or 13 or 14, **characterized in that** the at least one ink density actual value or the several ink density actual values occurring during the printing process are in each case automatically detected.

## Revendications

1. Procédé de détermination d'un élargissement du point de trame survenant lors d'un processus d'impression d'une machine à imprimer, où au moins un élément d'image est formé sur un support d'impression imprimé dans la machine à imprimer, où l'élargissement du point de trame pour ledit au moins un élément d'image est calculé sur la base d'au moins une valeur effective de densité chromatique et d'une valeur de consigne de densité chromatique prescrite pour l'élément d'image concerné, où ladite au moins une valeur effective de densité chromatique ou les plusieurs valeurs effectives de densité chromatique formées lors du processus d'impression en cours sont respectivement déterminées par un dispositif de détection opto-électronique monté dans la machine à imprimer, à un emplacement spécifié par l'élément d'image respectif, **caractérisé en ce qu'**au moins un capteur du dispositif de détection opto-électronique est étalonné sur la base d'au moins une valeur géométrique, où une couverture surfacique est utilisée comme valeur géométrique, ladite couverture surfacique correspondant à une surface du support d'impression imprimée avec l'élément d'image concerné.

2. Procédé selon la revendication 1, **caractérisé en ce que** l'emplacement où est déterminée ladite au moins une valeur effective de densité chromatique est spécifié au dispositif de détection opto-électronique.

3. Procédé selon la revendication 1 ou 2, **caractérisé en ce que** l'emplacement concerné où est déterminée ladite au moins une valeur effective de densité chromatique est spécifié par des données numériques au dispositif de détection opto-électronique.

4. Procédé selon la revendication 3, **caractérisé en ce que** les données numériques concernées sont fournies par ou dans un fichier.

5. Procédé selon la revendication 4, **caractérisé en ce que** le fichier se présente sous un format de données CIP3 ou sous un format de données JDF ou sous un format de données PDF ou sous un format de données TIFF, ou sous forme de fichier texte ou sous forme de fichier XML ou sous forme de fichier CSV, ou sous forme de liste.

6. Procédé selon la revendication 4 ou 5, **caractérisé en ce que** le fichier décrit une échelle de couleur à appliquer sur le support d'impression lors du processus d'impression concerné de la machine à imprimer et/ou la tâche de mesure.

7. Procédé selon la revendication 4 ou 5 ou 6, **caractérisé en ce que** le fichier est utilisé pour plusieurs tâches d'impression, voire même pour toutes les tâches d'impression à exécuter par ladite machine à imprimer.

8. Procédé selon la revendication 3 ou 4 ou 5 ou 6 ou 7, **caractérisé en ce que** les données numériques sont fournies par une unité de calcul extérieure à la machine à imprimer.

9. Procédé selon la revendication 4 ou 5 ou 6 ou 7 ou 8, **caractérisé en ce que** le fichier comprend au moins une indication relative à un site de mesure défini par l'emplacement concerné et/ou à un type de champ de mesure et/ou à une définition de champ de mesure.

10. Procédé selon la revendication 1 ou 2 ou 3 ou 4 ou 5 ou 6 ou 7 ou 8 ou 9, **caractérisé en ce que** la détermination des valeurs effectives de densité chromatique est effectuée directement dans une image d'impression ou dans un champ de mesure spécial d'une bande de mesure ou de la bande de mesure imprimée conjointement.

11. Procédé selon la revendication 1 ou 2 ou 3 ou 4 ou 5 ou 6 ou 7 ou 8 ou 9 ou 10, **caractérisé en ce qu'**un support d'impression en forme de feuille est imprimé dans la machine à imprimer, où une valeur moyenne est déterminée à partir des valeurs effectives de densité chromatique déterminées lors du même processus d'impression de plusieurs feuilles différentes en cours au même emplacement, où un élargissement relatif du point de trame est calculé sur la base de ladite valeur moyenne ainsi que la valeur de consigne de densité chromatique prescrite pour l'emplacement concerné.

12. Procédé selon la revendication 11, **caractérisé en ce que** la valeur moyenne est formée par un nombre ajustable de feuilles.

13. Procédé selon la revendication 1 ou 2 ou 3 ou 4 ou 5 ou 6 ou 7 ou 8 ou 9 ou 10, **caractérisé en ce qu'**un support d'impression en forme de bande transporté au travers de la machine à imprimer est imprimé, où une valeur moyenne est déterminée à partir des valeurs effectives de densité chromatique du même élément d'image imprimé de manière répétée lors du même processus d'impression en cours, déterminées successivement à un emplacement fixe dans la machine à imprimer, où un élargissement relatif du point de trame est calculé sur la base de ladite valeur moyenne ainsi que la valeur de consigne de densité chromatique prescrite pour l'emplacement concerné.

14. Procédé selon la revendication 1 ou 2 ou 3 ou 4 ou 5 ou 6 ou 7 ou 8 ou 9 ou 10 ou 11 ou 12 ou 13, **caractérisé en ce qu'**une détermination de ladite au moins une valeur géométrique exigée pour l'étalonnage dudit au moins un capteur est effectuée au moyen d'un colorimètre normalisé à mesure absolue ou d'un système de caméra externe de résolution supérieure à celle du système de mesure disposé dans la machine à imprimer.

15. Procédé selon la revendication 1 ou 2 ou 3 ou 4 ou 5 ou 6 ou 7 ou 8 ou 9 ou 10 ou 11 ou 12 ou 13 ou 14, **caractérisé en ce que** ladite au moins une valeur effective de densité chromatique ou les plusieurs valeurs effectives de densité chromatique formées lors du processus d'impression en cours sont saisies automatiquement.
